# FASCICULE DE BREVET EUROPEEN

(11) **EP 0 771 130 B1**
(45) Date de publication et mention de la délivrance du brevet: **05.10.2005**
(21) Numéro de dépôt: 96202956.7
(22) Date de dépôt: 23.10.1996
(51) Int. Cl.: H04Q 11/04, H04L 12/56

(54) **Dispositif de multiplexage et de planification pour un réseau de commutation ATM**
Multiplex- und Zuweisungsgerät für ein ATM-Netzwerk
Multiplexing and scheduling apparatus for an ATM switching network

(30) Priorité: 25.10.1995 FR 9512582
(43) Date de publication de la demande: 02.05.1997
(73) Titulaire: Koninklijke Philips Electronics N.V., 5621 BA Eindhoven (NL)
(72) Inventeur: Tibi, Georges, Société Civile S.P.I.D., 75008 Paris (FR); Gauthier, Jean-Pierre, Société Civile S.P.I.D., 75008 Paris (FR)
(74) Mandataire: Chaffraix, Jean

(56) Documents cités:
- EP-A- 0 596 624
- EP-A- 0 618 749
- US-A- 5 313 579
- SERVING HUMANITY THROUGH COMMUNICATIONS. SUPERCOMM/ICC, NEW ORLEANS, MAY 1 - 5, 1994, vol. VOL. 1, no. -, 1 Mai 1994, INSTITUTE OF ELECTRICAL AND ELECTRONICS ENGINEERS, pages 70-74, XP000438885 ANGELOPOULOS J D ET AL: "SERVING HUMANITY THROUGH COMMUNICATIONS. SUPERCOMM/ICC, NEW ORLEANS, MAY 1 - 5, 1994"

## Description

La présente invention concerne un Système de communication formé d'au moins un réseau du genre ATM, qui transmet d'un de ses points d'accès à un autre des cellules d'informations comportant un identificateur de destination définissant des connexions entre desdits points d'accès et d'au moins un dispositif de multiplexage (160) comportant :
- une pluralité de bornes d'accès (180) pour recevoir des cellules d'informations, chacune de ces bornes d'accès étant prévue pour une transmission à un débit de connexion donné,
- une pluralité d'organes tampons (201) de type FIFO qui sont chacun couplés avec l'une desdits bornes pour constituer une file d'attente des cellules reçues auxdits accès.

La présente invention concerne aussi un dispositif de multiplexage convenant à un tel système.

Un tel système est décrit dans le document de brevet européen publié sous le numéro 0618749 et s'applique notamment aux réseaux A.T.M.

La technique A.T.M (Asynchronous Transfer Mode) permet la transmission sur un même support de données de natures différentes (son, image, fichiers etc..). Ces données sont rangées dans des paquets appelés cellules d'une longueur normalisée de 53 octets. Une adresse contenue dans l'entête, composée de deux champs, le VPI (Virtual Path Identifier) et le VCI (Virtual Channel Identifier) assure le routage des cellules au sein du réseau A.T.M. et permet ainsi d'effectuer une connexion entre un abonné demandeur et un abonné appelé. Le contenu utile de la trame de transmission s'appelle le conduit ATM. Une succession de cellules ATM possédant le même VPI constitue un conduit virtuel VP. Le chemin suivi par une succession de cellules ATM pour le même VPI et le même VCI constitue un conduit virtuel VC.

Cependant, bien que le format de base de la cellule soit le même pour toutes les données de natures différentes, chacune des connexions que l'on doit prévoir pour chaque nature, a ses caractéristiques propres en terme de trafic et de Qualité de Service (QoS en anglais). Les caractéristiques (incluant le prix ...) de chaque connexion doivent être spécifiées de manière détaillée dans le contrat liant l'utilisateur de la connexion ATM et l'exploitant du réseau qui la lui fournit. Ce contrat engage à la fois l'usager et l'exploitant du réseau :
- L'exploitant s'engage à transmettre les données (cellules ATM) de l'usager avec une certaine qualité de service (spécifiée en terme de temps de transfert de cellule moyen ou maximum, de nombre de cellules erronées, de nombre de cellules perdues, etc ...), pour un "gabarit de trafic" spécifié dans le contrat et pour un prix fixé dans le contrat.
- L'usager s'engage à payer pour le service de transport de données qui lui est fourni par le réseau, et est prévenu que, s'il ne respecte pas le gabarit de trafic spécifié dans le contrat, le réseau n'assure plus la qualité de service (il peut, par exemple, détruire les cellules qui sont "en dehors" du gabarit de trafic fixé par le contrat).

Pour accéder au réseau A.T.M on est donc confronté à ces contraintes de débit et à des problèmes de gigue tant au niveau du conduit virtuel VP que du conduit virtuel VC. La gigue qui se manifeste par une irrégularité dans le temps de l'apparition des cellules est particulièrement désagréable pour des applications dites en temps réel par exemple pour les services de vidéo.

Le point d'accès au réseau est assuré par un dispositif de multiplexage qui doit, par conséquent, comporter des moyens pour agencer les cellules dans le conduit A.T.M de manière à ce qu'elles soient en conformité avec cette police et aussi à amener le moins de gigue possible.

Il est connu des documents de brevet EP 0 596 624 et US5,313,573 de gérer la gestion de ces cellules.

L'invention propose un système qui gère d'une façon optimale l'émission des cellules.

Pour cela, un système du genre mentionné dans le préambule est remarquable en ce que le dispositif de multiplexage est muni d'un circuit d'affectation (300) comportant une mémoire (501) dans laquelle une date Dⱼ et une période Tⱼ dont la valeur est fixée par ledit débit de connexion, sont affectée à chacune des connexions et dans laquelle une organisation de groupes de connexions est prévue, chacun des groupes étant affecté à des connexions dont le débit est de même ordre de grandeur dispositif de multiplexage comportant, en outre :
- un ensemble d'adressage (503) fournissant un cycle d'adressage pour adresser chaque connexion de chaque groupe un certain nombre de fois de façon cyclique
- un circuit de traitement (510) pour mettre à jour lesdites dates en utilisant un comparateur (512) qui compare les dates emmagasinées Dⱼ avec une date couranteⱼ et qui fournit un signal pour l'émission d'une cellule lorsque le comparateur indique une coïncidence ou une date passée de la date emmagasinée, la période de temps affectée à la connexion étant rajoutée à la date emmagasinée.

Pour cela, un système du genre mentionné dans le préambule est remarquable en ce que le circuit d'affectation comporte, entre autres :
- des moyens pour fournir un signal de préparation d'autorisation d'émission de cellule à la commande d'émission pour chaque circuit de service en des temps inférieurs par rapport à l'inverse de son débit.

Ainsi, selon les mesures préconisées par l'invention, on prépare déjà les autorisations selon un rythme proche de celui désiré et le fait que ce rythme soit plus rapide que le débit souhaité permet une gestion aisée de ces autorisations par une façon simple de rejeter les autorisations superflues.

Selon une caractéristique importante de l'invention, en vue de permettre cette gestion aisée, un tel système de communication est remarquable en ce que les autres moyens du circuit d'affectation sont constitués par :
- un dispositif de répartition pour établir des groupes d'au moins une connexion et des blocs de groupes dont le nombre est une fonction décroissante du débit des connexions,
- un circuit d'attribution de date et de période pour attribuer à chaque connexion une date d'émission et une période déterminée par son débit,
- un circuit d'horloge pour fournir une date courante,
- un circuit de sélection pour sélectionner cycliquement un groupe dans chaque bloc,
- un circuit de comparaison pour fournir, au rythme dudit signal de préparation, une indication de date passée ou de date future par comparaison de la date d'émission de chaque connexion des groupes sélectionnés avec la date courante,
- un circuit de ré-attribution pour ré-attribuer la même date d'émission pour une indication de date future ou pour rajouter à la date d'émission ladite période pour une indication de date passée.
- un circuit de validation pour fournir un signal d'autorisation d'émission de cellule à la commande d'émission des circuits de service à partir de l'indication de date passée.

La description suivante faite en regard des dessins ci-annexés, le tout donné à titre d'exemple non limitatif, fera bien comprendre comment l'invention peut être réalisée.
La figure 1 montre un réseau sur lequel est connecté un dispositif de multiplexage conforme à l'invention.
La figure 2 montre la structure des cellules d'information transmises par le réseau.
La figure 3 montre un dispositif de multiplexage conforme à l'invention.
La figure 4 montre la structure d'un circuit d'affectation faisant partie du dispositif de la figure 3.

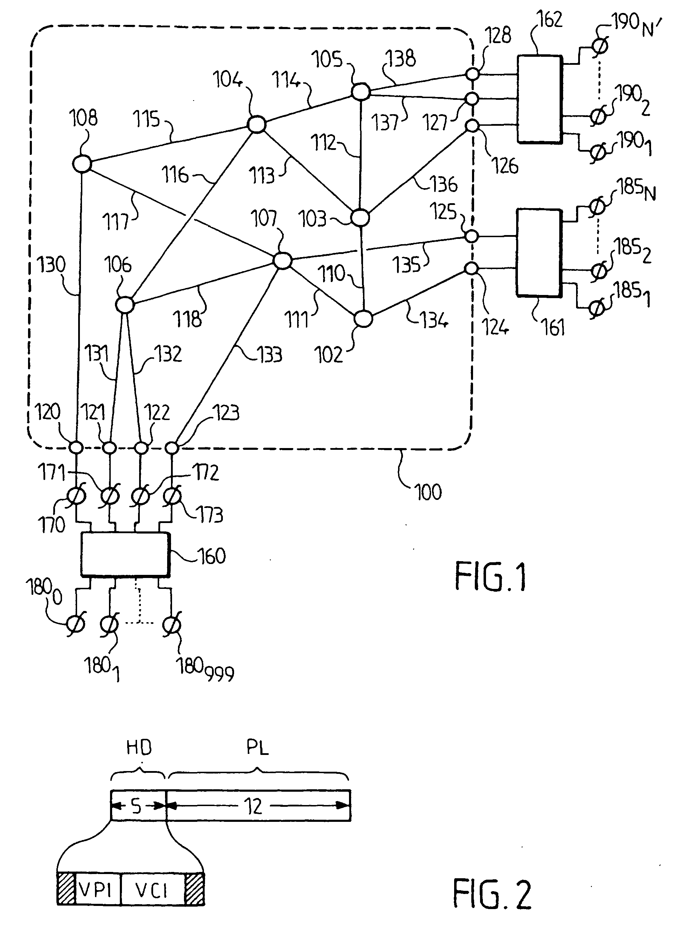

La figure 1 montre d'une manière schématisée un réseau A.T.M. portant sur la figure la référence 100. On trouvera une description de ce réseau dans l'ouvrage : "ASYNCHRONOUS TRANSFER MODE" de Martin de PRYCKER paru en 1991 aux éditions ELLIS HORWOOD en Angleterre. Ce réseau est constitué de différents noeuds 102, 103, 104, 105, 106, 107 et 108 reliés entre eux par des liaisons 110 à 118 pour relier respectivement les noeuds 102-103, 102-107, 103-105, 103-104, 104-105, 104-108, 104-106, 107-108 et 106-107. On a repéré par 120 à 128 différents points d'accès de ce réseau. Ces points d'accès sont respectivement reliés aux noeuds 108, 106, 106, 107, 102, 107, 103, 105 et 105 par l'intermédiaire de liaisons 130 à 138 respectivement. A ces points d'accès, se connectent différents dispositifs de multiplexage et de démultiplexage 160, 161 et 162. Parmi ces dispositifs, il faut distinguer : un dispositif de multiplexage 160, faisant partie de la présente invention, et deux dispositifs de démultiplexage 161 et 162 qui effectuent les opérations inverses de celles du dispositif 160 et qui font partie du système de l'invention. On trouvera dans le document de brevet n° EP 0 632 669 déposé le 23 juin 1994 une description de tels dispositifs de démultiplexage. Pour être relié aux quatre points 120, 121, 122 et 123, le dispositif de multiplexage 160 est muni de quatre bornes de raccord 170, 171, 172 et 173. Ainsi les informations peuvent, dans le cadre de cet exemple décrit, aller du dispositif 160 vers les dispositifs 161 et 162 en transitant par le réseau 100. Ces informations à transmettre sont appliquées à une pluralité de bornes d'accès 180₀ à 180₉₉₉ dont est pourvu le dispositif de multiplexage 160, et peuvent être fournies, entre autres, à des bornes de sortie 185₁ à 185_{N} du dispositif 161 et 190₁ à 190_{N'} du dispositif 162. L'ordre de grandeur de N et N' est du millier. Les informations transmises dans le réseau se présentent sous forme de cellules dont la constitution est montrée à la figure 2. Ces cellules sont formées de 53 octets : 5 constituent l'entête HD et les 48 autres référencés par PL contiennent les données pour un service à transmettre. Dans l'entête, on distingue deux codes VPI et VCI correspondant respectivement à des identificateurs de chemin virtuel et de circuit virtuel. Les identificateurs de chemin sont plutôt traités par l'opérateur de transmission et l'identificateur de circuit virtuel par l'exploitant du réseau.

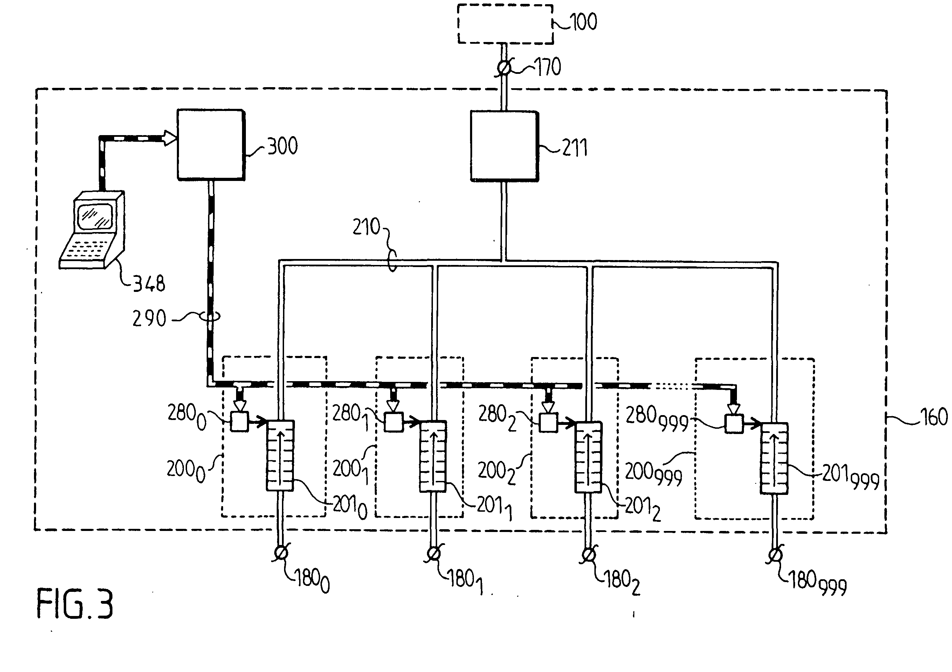

La figure 3 montre un schéma du dispositif de multiplexage 160. Sur cette figure, on s'intéresse seulement, pour simplifier l'exposé, aux cellules à fournir à la seule borne 170 à partir des bornes d'accès 180₀ à 180₉₉₉.

Chacune de ces bornes 180₀ à 180₉₉₉ reçoit des cellules ayant les mêmes identificateurs et les mêmes contraintes de trafic. Les cellules sont emmagasinées respectivement dans des organes-tampons faisant office de files d'attente 200₀ à 200₉₉₉, Ces différents organes 200₀ à 200₉₉₉ sont constitués à partir d'une mémoire de type FIFO 201₀ à 201₉₉₉ respectivement. Ces mémoires restituent à leur sortie les données dans l'ordre où elles ont été entrées. Une ligne commune de données 210 connecte la sortie des organes de file d'attente à la borne 170, via un circuit de sortie 211 qui est un simple circuit pour l'adaptation des signaux sur la borne 120. Les organes de file d'attente 200₀ à 200₉₉₉ sont aussi pourvus d'organes d'autorisation d'émettre que l'on a fait figurer respectivement sous forme d'un organe décodeur 280₀ à 280₉₉₉. Les entrées de ces organes décodeurs sont reliées à une troisième ligne commune 290 qui interconnecte tous les organes de file d'attente 200₀ à 200₉₉₉. Comme un code de reconnaissance "i" (0≤ i ≤ 999) est affecté à chacun de ces organes 200₀ à 200₉₉₉, ces décodeurs décoderont le code qui est transmis.

Un circuit d'affectation 300 fournit sur cette dernière ligne 290 le code de reconnaissance pour autoriser l'organe de file d'attente, concerné par ce code, à émettre une cellule dite cellule élue. Le circuit d'affectation est géré au moyen d'un organe de gestion présenté sous la forme d'un terminal informatique 348.

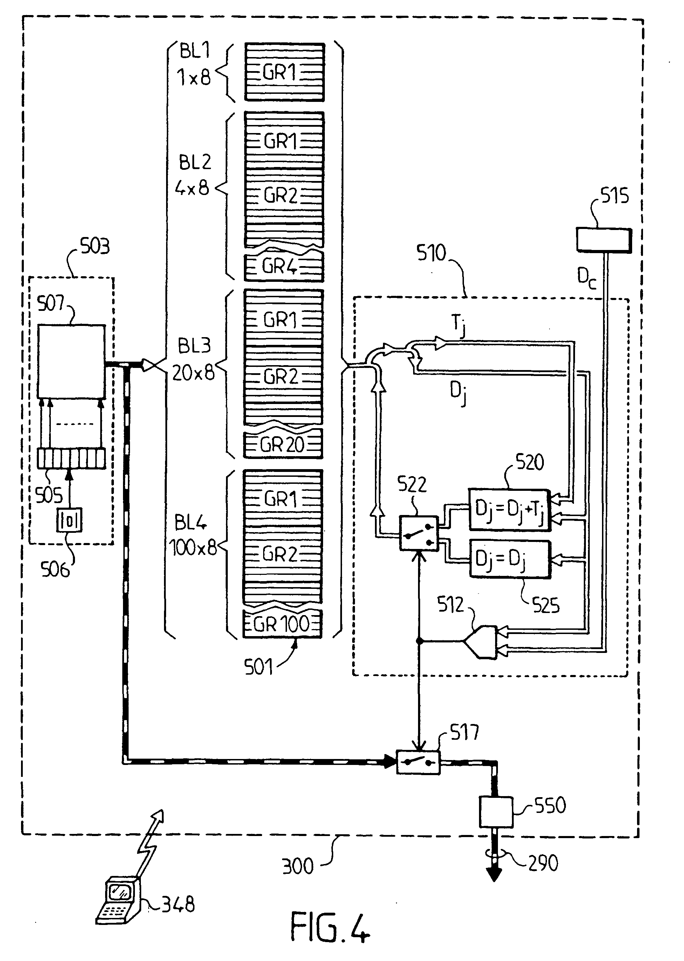

La figure 4 montre la structure du circuit 300. Ce circuit est élaboré autour d'une mémoire 501 formée d'autant de lignes qu'il y a de connexions à gérer. Chaque ligne comporte deux mots : une date Dⱼ et une période Tⱼ. L'indice "j" des références de ces mots peut être identifié aux codes de reconnaissance "i" précités.

Selon l'invention, les connexions sont classées par débit décroissant de haut en bas sur la figure. Elles sont disposées en quatre blocs BL1 à BL4. Chacun de ces blocs est partagé en groupes de huit connexions. Le bloc BL1 comporte 1 groupe, les blocs BL2, BL3 et BL4 en comportent : 4, 20 et 100 respectivement. Cette répartition est initialement établie au moyen du terminal 348. A cette mémoire 501, est associé un ensemble d'adressage 503 formé d'un compteur 505 comptant les impulsions d'un circuit d'horloge 506 et d'un convertisseur de codes d'adressage 507. Cette horloge fournit quatre phases (lecture, comparaison, écriture, repos) nécessaires au circuit de traitement 510. Comme 32 connexions sont scrutées à chaque période d'émission "u" d'une cellule ATM, la période du signal d'horloge est donc égale à u/(4*32). Selon un mode de réalisation préféré de l'invention le convertisseur est agencé de la façon suivante, indiquée par une table de vérité explicitée dans le tableau I ci-dessous. Cette table peut être réalisée selon sa complexité, de différentes manières :
- ROM (mémoire à lecture seule)
- RAM (mémoire à lecture et à écriture autorisée)
- Logique combinatoire
- Automate d'états, auquel cas, il peut intégrer le compteur 505.

**TABLEAU I**

| compteur | adresse ligne | compteur | adresse ligne |
|---|---|---|---|
| 0001 | BL1, | ... | ........... |
| 0008 | CX1..CX8 | | |
| 0009 | BL2,GR1 | 0617 | BL2,GR4 |
| 0016 | CX1..CX8 | 0624 | CX1..CX8 |
| 0017 | BL3,GR1 | 0625 | BL3,GR20 |
| 0024 | CX1..CX8 | 0632 | CX1..CX8 |
| 0025 | BL4,GR1 | 0633 | BL4,GR20 |
| 0032 | CX1..CX8 | 0640 | CX1..CX8 |
| 0033 | BL1, | 0641 | BL1 |
| 0040 | CX1..CX8 | 0648 | CX1..CX8 |
| 0041 | BL2,GR2 | 0649 | BL2,GR1 |
| 0048 | CX1..CX8 | 0656 | CX1..CX8 |
| 0049 | BL3,GR2 | 0657 | BL3,GR1 |
| 0056 | CX1..CX8 | 0664 | CX1..CX8 |
| 0057 | BL4,GR2 | 0665 | BL4,GR21 |
| 0064 | CX1..CX8 | 0672 | CX1..CX8 |
| 0065 | BL1, | 0673 | BL1 |
| 0072 | CX1..CX8 | 0680 | CX1..CX8 |
| 0073 | BL2,GR3 | 0681 | BL2,GR2 |
| 0080 | CX1..CX8 | 0688 | CX1..CX8 |
| 0081 | BL3,GR3 | 0689 | BL3,GR2 |
| 0088 | CX1..CX8 | 0696 | CX1..CX8 |
| 0089 | BL4,GR3 | 0697 | BL4,GR22 |
| 0096 | CX1..CX8 | 0704 | CX2..CX8 |
| 0097 | BL1, | ... | ....... |
| 0104 | CX1..CX8 | | |
| 0105 | BL2,GR4 | 3161 | BL4,GR99 |
| 0112 | CX1..CX8 | 3168 | CX1..CX8 |
| 0113 | BL3,GR4 | 3169 | BL1 |
| 0120 | CX1..CX8 | 3176 | CX1..CX8 |
| 0121 | BL4,GR4 | 3177 | BL2,GR4 |
| 0128 | CX1..CX8 | 3184 | CX1..CX8 |
| 0129 | BL1, | 3185 | BL3,GR20 |
| 0136 | CX1..CX8 | 3192 | CX1..CX8 |
| 0137 | BL2,GR1 | 3193 | BL4,GR100 |
| 0144 | CX1..CX8 | 3200 | CX1..CX8 |

Ce tableau donne dans la colonne de gauche le contenu du compteur 505 et la colonne de droite les éléments adressés.
Cet adressage est décomposé en cyles affectés chacun à une période cellule "u". Durant chaque cycle, huit lignes de connexion de tous les blocs sont traitées. A chaque cycle toutes les lignes de connexion du bloc BL1 sont traitées. Il faut quatre cycles pour traiter les lignes de connexions du bloc BL2, 20 cycles pour celles du bloc BL3 et 100 cycles pour celles du bloc BL4.

Le circuit de traitement 510 assure la mise à jour des différentes dates Dⱼ des lignes de connexions. Pour cela, il est prévu un comparateur 512 qui compare les dates Dⱼ emmagasinées à l'emplacement défini par l'ensemble d'adressage 503 avec une date courante D_{c} fournie par un circuit de date courante 515.

Si la date Dⱼ est une date passée ou une date actuelle, alors le comparateur fournit un signal qui valide la ligne de connexion pour l'émission d'une cellule. Ceci est représenté schématiquement par un interrupteur 517. Un additionneur 520 ajoute Tⱼ à la date Dⱼ. Le résultat est ensuite enregistré à cette même ligne de connexion en transitant par un commutateur 522.

Si la date Dⱼ est une date future, alors il n'y a pas lieu d'émettre une cellule, l'interrupteur 517 est ouvert et la date Dⱼ qui est inscrite dans un registre 525 est remise dans son emplacement.

Un circuit de validation 550 permet l'autorisation d'émission. Ce circuit 550 peut être soit une simple file d'attente qui reçoit en entrée les identificateurs constitués, les codes d'adresses validés par la position fermée de l'interrupteur 517 et qui émet à chaque temps cellule, l'identificateur situé en tête de file d'attente, soit un circuit du genre décrit dans le document de brevet déposé en France sous le numéro 9407664 le 22 juin 1994. Ce documemt décrit un circuit d'arborescence impliquant des dates-butée.

On rappelle que "u" est la "période cellule" de la connexion physique commune supportant les connexions ATM (dans le cas considéré elles sont toutes multiplexées sur le même lien physique). En prenant le cas d'un lien d'accès standard SDH (Synchronous Digital Hierarchy) à 155,52 Mbit/s cela donne une période cellule de l'ordre de 3 microsecondes. Comme on a à traiter 1000 connexions ATM simultanément, le dispositif de comparaison de dates ne réalise que 32 opérations par unité de temps u. On supposera de plus que la somme des débits des connexions est au maximum égale au débit utile du lien physique (charge égale à 100 % au maximum, on n'exploite pas les propriétés de "multiplexage statistique" mieux connu en littérature anglo-saxonne sous le nom - overbooking - de l'ATM)
Pour la compréhension de la suite du document on établit préalablement le "lemme" suivant :

Une connexion située à la case "n" de la table a une période au moins égale à n*u.
- La somme des débits de toutes les connexions est inférieure à 100 % du débit du multiplex, cela est par conséquent valable pour la somme des débits "Debᵢ" des connexions 1 à n (somme limitée aux connexions de plus haut débit en haut de la table).
- De plus les Debᵢ étant classés par ordre décroissant, cette dernière somme des débits de 1 à n est supérieure à n*Debₙ (car Debₙ est inférieur ou égal à Debᵢ pour i inférieur à n, d'après le classement).
- On a donc, en minorant les n-1 premiers termes de la somme par Debₙ, n*Debₙ inférieur à 100 % du multiplex, ce qui signifie que Debₙ est au plus égal à 1/n -ième du débit du multiplex.
- Cette dernière propriété, traduite en terme de période (Tn = 1/Debn et u = 1/Debmultiplex) fournit la relation à démontrer :
   Tn supérieur ou égal à n*u.
   Ce résultat étant démontré, on peut présenter le fonctionnement du dispositif comme suit :
   On initialise chaque Tj ainsi que la date courante, à la valeur t0.
   Pendant chaque unité de temps u, la capacité de traitement de 32 connexions par le dispositif de comparaison va être utilisée comme suit :
   - Traitement des 8 connexions du groupe 1 (en haut de la table),
   - Traitement de 8 connexions du groupe 2 (de manière cyclique, ainsi en 4 unités de temps on traitera chacune des 32 connexions),
   - Traitement de 8 connexions du groupe 3 (de manière cyclique, ainsi en 20 unités de temps on traitera chacune des 160 connexions),
   - Traitement de 8 connexions du groupe 4 (de manière cyclique, ainsi en 100 unités de temps on traitera chacune des 800 connexions).

Ce traitement de connexions à déjà été explicité ci-dessus.

Ce dispositif va assurer que chacune des connexions j est traitée avec une "irrégularité" d'au plus Tj/2 grâce au classement des connexions par débit décroissant, ainsi que cela est expliqué ci-dessous.

Etant donné le classement des connexions par débit décroissant, on a dans le groupe 1 les 8 connexions de plus haut débit : on peut donc dire pour chacune d'entre elles que sa période Tj associée est supérieure ou égale à u ; or chacune de ces connexions est traitée à chaque période u (car on a 8 connexions dans le groupe et 8 traitements par période u pour ce groupe), on détecte donc immédiatement le fait qu'une date d'autorisation d'émission Dⱼ arrive à échéance pour une de ces connexions.

Pour le groupe 2, les connexions, grâce au classement réalisé, vont avoir une période supérieure ou égale à 9*u (car les connexions concernées se trouvent toutes après la 9^{ième} case de la table, cf. Lemme démontré plus haut). Or pour ce groupe, les 32 connexions sont traitées en 4 périodes u, car on a 8 ressources de traitement par période u pour ce groupe. On en déduit donc, étant donné que toutes les périodes des connexions du groupe 2 sont supérieures à 4,5 * u, que les irrégularités de traitement pour les connexions de ce groupe sont toutes inférieures à Tj/2.

Il en est de même pour le groupe 3, pour lequel les périodes des connexions sont supérieures ou égales à 41 * u ; le traitement complet pour ce groupe est en effet réalisé en 20 périodes u (car 160 connexions et 8 traitements par période), ce qui assure une irrégularité inférieure à Tj/2.

Enfin pour le groupe 4, avec des périodes supérieures ou égales à 201 * u, 800 connexions au total et 8 traitements par période, l'ensemble du groupe est traité en 100 périodes u, ce qui assure le résultat recherché.

Ainsi, par les mesures de l'invention, il est possible d'effectuer le traitement de 1000 connexions avec un seul comparateur ayant une capacité de traitement de 32 connexions par période u (période cellule du multiplex).

L'invention peut donc se résumer aux points suivants :
- a) exploiter la marge de tolérance du réseau concernant les irrégularités (< Tj/2),
- b) classer les connexions dans la table de dates d'autorisation d'émission,
- c) sélectionner correctement l'algorithme de partage des "ressources de comparaison".
Les généralisations suivantes font partie du domaine réservé de l'invention :
a) L'invention peut être utilisée avec des classements dans la table et des algorithmes de partage de ressources différents de celui proposé ici, qui seraient liés à la Qualité de Service des connexions.
   On peut prendre un exemple "simpliste" :
   Si l'on a une connexion particulière qui demande un traitement à chaque période u afin d'éviter toute irrégularité, on peut la positionner dans le groupe 1 quel que soit son débit. Sur cet exemple on voit facilement que cela ne perturbe pas les autres connexions qui ont été décalées vers le bas.
   Ce type d'utilisation pourrait être répété à l'infini : pour un algorithme donné de partage de ressources, le positionnement d'une connexion donnée dans la table lui garantit une certaine qualité de service, ces garanties de Qualité de Service peuvent alors être allouées à telle ou telle connexion suivant des critères assez variés.
b) On pourrait aussi généraliser ce principe à des partages de ressources autres que des "ressources de comparaison". Un exemple simple qui peut être fourni ici est le cas d'un microprocesseur qui est chargé de relever des compteurs cellules (en les remettant à 0) pour différentes connexions ATM à des débits variés, ces compteurs étant tous de taille identique, par exemple 16 bits. Le problème à résoudre est d'éviter la saturation d'un compteur. Pour cela on peut prendre en compte le "pire cas" et relever tous les compteurs suffisamment vite pour qu'aucun d'entre eux n'ait le temps de saturer. Cela va demander beaucoup de charge au microprocesseur si l'on a un nombre de connexions de l'ordre de quelques milliers.

Une autre solution consiste à utiliser un fonctionnement similaire à celui proposé dans la présente demande. La table contient cette fois-ci les compteurs à relever, qui sont tenus à jour par un processus de comptage (à chaque période u, un seul compteur est incrémenté car cela correspond à l'émission ou à la réception d'une seule cellule), et la ressource partagée est ici le temps CPU du microprocesseur. Le microprocesseur viendra relever plus fréquemment les compteurs des connexions haut débit (en haut de la table) que ceux des connexions bas débit vers le bas, car ces derniers mettent plus longtemps à saturer. On économise ainsi du temps CPU tout en traitant correctement chacune des connexions.

Le principe général de la présente invention serait par conséquent une "personnalisation" ou une "non banalisation" des traitements des connexions ATM : au lieu d'avoir un "nivellement par le haut", c'est-à-dire de traiter toutes les connexions comme si elles étaient toutes d'une exigence maximale en terme de traitement, ce qui est bien sûr très coûteux, on prend en compte les différences qui existent entre elles pour allouer plus intelligemment les ressources (en réalisant des économies de prix, de surface ou de temps de traitement, ou en traitant un nombre de connexions nettement plus élevé). Ce mécanisme est bien sûr plus complexe à mettre en oeuvre mais atteint rapidement son "seuil de rentabilité".

On doit bien remarquer que selon l'invention, le système apporte par rapport à l'art antérieur l'avantage important suivant : l'ajout d'une connexion ne nécessite pas de nouveau calculs du contenu d'une table de répartition comme décrit dans le document de brevet EP n° 0618749 précité.

Cette opération est longue à effectuer et pénalisante dans un réseau où des dizaines de connexions s'établissent par seconde. Le convertisseur de codes 507 tient lieu de "table de répartition générique". L'ajout d'une connexion j s'effectue simplement par chargement de Tj et Dj.

Cependant, au prix de perdre cet avantage pour en gagner un autre, la gigue peut être abaissée à une valeur très inférieure à une période Tj pour la connexion j considérée. L'utilisation d'une RAM pour réaliser le convertisseur de codes permet de personnaliser chaque connexion. L'ajout d'une connexion est alors coûteuse en temps de configuration mais la gigue peut être abaissée de manière drastique.

Ainsi, on considère pour l'instant un dispositif scrutant une seule connexion par cycle u. La mémoire du convertisseur est chargée identiquement à ce qui a été décrit dans le document de brevet Européen No 0618748 (à savoir qu'une connexion a un code régulièrement espacé dans la mémoire de "d" éléments si elle représente 1/d du débit total du conduit ATM). Le circuit de traitement 510 est alors transparent et observe des dates Dj toujours passées. La gigue maximale est alors de une période Tj (en négligeant les interactions entre connexions).

Maintenant si, sans modifier la mémoire du convertisseur de codes, on autorise la scrutation de 32 connexions par cycle u et si on dote le dispositif du mécanisme de notification décrit dans les documents de brevets Français No. 9407664 déposé le 22 Juin 1994 et No. 9503693 déposé le 29 Mars 1995, la gigue générée n'est plus que de Tj/32.

Bien sûr, pour être efficace dans ce dernier mode, le dispositif devra être suivi par un système d'élection par "date butée" décrit par exemple dans les documents de brevets cités ci-dessus.

## Revendications

1. Système de communication formé d'au moins un réseau du genre ATM, qui transmet d'un de ses points d'accès à un autre des cellules informations comportant un identificateur de destination définissant des connexions entre desdits points d'accès et d'au moins un dispositif de multiplexage (160) comportant :
- une pluralité de bornes d'accès (180) pour recevoir des cellules d'informations, chacune de ces bornes d'accès étant prévue pour une transmission à un débit de connexion donné,
- une pluralité d'organes tampons (201) de type FIFO qui sont chacun couplés avec l'une desdits bornes pour constituer une file d'attente des cellules reçues auxdits accès,
système **caractérisé en ce que** le dispositif de multiplexage est muni d'un circuit d'affectation (300) comportant une mémoire (501) dans laquelle une date (Dⱼ) et une période (Tⱼ) dont la valeur est fixée par ledit débit de connexion, sont affectée à chacune des connexions et dans laquelle une organisation de groupes de connexions est prévue, chacun des groupes étant affecté à des connexions dont le débit est de même ordre de grandeur, dispositif de multiplexage comportant, en outre :
- un ensemble d'adressage (503) adapté pour fournir un cycle d'adressage pour adresser chaque connexion de chaque groupe un certain nombre de fois de façon cyclique
- un circuit de traitement (510) pour mettre à jour lesdites dates en utilisant un comparateur (512) adapté pour comparer les dates emmagasinées (Dⱼ) avec une date courante (D_{c}) et adapté pour fournir un signal pour l'émission d'une cellule lorsque le comparateur indique une coïncidence ou une date passée de la date emmagasinée, la période de temps affectée à la connexion étant rajoutée à la date emmagasinée,
- un circuit de comparaison pour fournir, au rythme dudit signal de préparation, une indication de date passée ou de date future par comparaison de la date d'émission de chaque connexion des groupes sélectionnés avec la date courante,
- un circuit de ré-attribution pour ré-attribuer la même date d'émission pour une indication de date future ou pour rajouter à la date d'émission ladite période pour une indication de date passée.

2. Dispositif de multiplexage (160) convenant à un système de la revendication 1, comportant :
- une pluralité de bornes d'accès (180) pour recevoir des cellules d'informations, chacune de ces bornes d'accès étant prévue pour une transmission à un débit de connexion donné,
- une pluralité d'organes tampons (201) de type FIFO qui sont chacun couplés avec l'une desdits bornes pour constituer une file d'attente des cellules reçues auxdits accès,
**caractérisé en ce qu'**il est muni d'un circuit d'affectation (300) comportant une mémoire (501) dans laquelle une date (Dⱼ) et une période (Tⱼ) dont la valeur est fixée par ledit débit de connexion, sont affectée à chacune des connexions et dans laquelle une organisation de groupes de connexions est prévue, chacun des groupes étant affecté à des connexions dont le débit est de même ordre de grandeur, dispositif de multiplexage comportant, en outre :
- un ensemble d'adressage (503) adapté pour fournir un cycle d'adressage pour adresser chaque connexion de chaque groupe un certain nombre de fois de façon cyclique
- un circuit de traitement (510) pour mettre à jour lesdites dates en utilisant un comparateur (512) adapté pour comparer les dates emmagasinées (Dⱼ) avec une date courante (D_{c}) et adapté pour fournir un signal pour l'émission d'une cellule lorsque le comparateur indique une coïncidence ou une date passée de la date emmagasinée, la période de temps affectée à la connexion étant rajoutée à la date emmagasinée,
- un circuit de comparaison pour fournir, au rythme dudit signal de préparation, une indication de date passée ou de date future par comparaison de la date d'émission de chaque connexion des groupes sélectionnés avec la date courante,
- un circuit de ré-attribution pour ré-attribuer la même date d'émission pour une indication de date future ou pour rajouter à la date d'émission ladite période pour une indication de date passée.

## Patentansprüche

1. Kommunikationssystem, gebildet aus mindestens einem Netzwerk der Art ATM, das von einer der Zugriffsstellen an eine der anderen Informationszellen überträgt, mit einem Bestimmungsanzeiger zur Definition der Verbindungen zwischen den besagten Zugriffsstellen, und aus mindestens einer Multiplexanordnung (160) mit:
- einer Vielzahl von Zugriffsklemmen (180) für den Erhalt der Informationszellen, wobei jede dieser Zugriffsklemmen für eine Übertragung mit einer bestimmten Verbindungsgeschwindigkeit vorgesehen ist,
- einer Vielzahl von Pufferorganen (201) des Typs FIFO, die jeweils mit einer der besagten Klemmen gepaart sind, um eine Warteschleife der Zellen zu bilden, die von den besagten Zugriffen erhalten wurden,
ein **dadurch gekennzeichnete**s System, dass die Multiplexanordnung mit einer Zuteilungsschaltung (300) mit einem Speicher (501) ausgestattet ist, in dem ein Datum (Dⱼ) und ein Takt (Tⱼ) mit von der besagten Verbindungsgeschwindigkeit festgelegtem Wert zugeteilt werden und in dem eine Organisation von Verbindungsgruppen vorgesehen ist, wobei jeder der Gruppen Verbindungen zugeteilt sind, deren Geschwindigkeit dieselbe Größenordnung haben, eine Multiplexanordnung mit außerdem:
- einer Adressiereinheit (503), angepasst für die Lieferung eines Adressierzyklus, um jede Verbindung jeder Gruppe eine bestimmte Anzahl von Malen auf zyklische Art zu adressieren,
- einer Verarbeitungsschaltung (510) für die Aktualisierung der besagten Daten unter Verwendung eines angepassten Vergleichers (512) für den Vergleich der gespeicherten Daten (Dⱼ) mit einem laufenden Datum (D_{c}), angepasst für die Ausgabe eines Signals zur Sendung einer Zelle, wenn der Vergleicher eine Übereinstimmung oder ein abgelegtes vergangenes Datum anzeigt, wobei der der Verbindung zugeteilte Zeitraum dem abgelegten Datum hinzugefügt wird,
- einer Vergleichsschaltung für die Ausgabe an den Takt des besagten Vorbereitungssignals einer vergangenen Datumsangabe oder eines zukünftigen Datums mit dem Vergleich des Sendedatums jeder Verbindung der mit laufenden Datum ausgewählten Gruppen,
- einer Neuzuteilungsschaltung für die Neuzuteilung desselben Sendedatums für eine zukünftige Datumsangabe oder für die Hinzufügung zum Sendedatum des besagten Takts einer vergangenen Datumsangabe.

2. Multiplexanordnung (160), geeignet für ein System nach Anspruch 1, mit:
- einer Vielzahl von Zugriffsklemmen (180) für den Erhalt der Informationszellen, wobei jede dieser Zugriffsklemmen für eine Übertragung mit einer bestimmten Verbindungsgeschwindigkeit vorgesehen ist,
- einer Vielzahl von Pufferorganen (201) des Typs FIFO, die jeweils mit einer der besagten Klemmen gepaart sind, um eine Warteschleife der Zellen zu bilden, die von den besagten Zugriffen erhalten wurden,
**dadurch gekennzeichnet, dass** die Multiplexanordnung mit einer Zuteilungsschaltung (300) mit einem Speicher (501) ausgestattet ist, in dem ein Datum (Dⱼ) und ein Takt (Tⱼ) mit von der besagten Verbindungsgeschwindigkeit festgelegtem Wert zugeteilt werden und in dem eine Organisation von Verbindungsgruppen vorgesehen ist, wobei jeder der Gruppen Verbindungen zugeteilt sind, deren Geschwindigkeit dieselbe Größenordnung haben, eine Multiplexanordnung mit außerdem:
- einer Adressiereinheit (503), angepasst für die Lieferung eines Adressierzyklus, um jede Verbindung jeder Gruppe eine bestimmte Anzahl von Malen auf zyklische Art zu adressieren,
- einer Verarbeitungsschaltung (510) für die Aktualisierung der besagten Daten unter Verwendung eines angepassten Vergleichers (512) für den Vergleich der gespeicherten Daten (Dⱼ) mit einem laufenden Datum (D_{c}), angepasst für die Ausgabe eines Signals zur Sendung einer Zelle, wenn der Vergleicher eine Übereinstimmung oder ein abgelegtes vergangenes Datum anzeigt, wobei der der Verbindung zugeteilte Zeitraum dem abgelegten Datum hinzugefügt wird,
- einer Vergleichsschaltung für die Ausgabe an den Takt des besagten Vorbereitungssignals einer vergangenen Datumsangabe oder eines zukünftigen Datums mit dem Vergleich des Sendedatums jeder Verbindung der mit laufenden Datum ausgewählten Gruppen,
- einer Neuzuteilungsschaltung für die Neuzuteilung desselben Sendedatums für eine zukünftige Datumsangabe oder für die Hinzufügung zum Sendedatum des besagten Takts einer vergangenen Datumsangabe.

## Claims

1. A communications system, notably formed by at least a network of the ATM type which transmits from one of its access points to another access point information cells which have a destination identifier which defines connections between two of said access points, and at least a multiplexing apparatus (160), comprising:
- a plurality of access terminals (180) for receiving information cells, each of which access terminals being provided for a transmission at a given connection rate,
- a plurality of buffer elements (201) of the FIFO type which are each coupled to one of said terminals to form a queue of cells received on said accesses,
which system is **characterized in that** the multiplexing apparatus includes an allocation circuit (300) comprising a memory (501) in which a date (Dⱼ) and a time (Tⱼ), whose value is fixed by said connection rate, are allocated to each of the connections and in which an organization of connection groups is provided, while each of the groups is allocated to connections whose rate is of the same order of magnitude, the multiplexing apparatus further comprising:
- an addressing set (503) adapted for producing an addressing cycle for cyclically addressing each connection of each group a certain number of times,
- a processing circuit (510) for updating said dates by utilizing a comparator (512) adapted for comparing the stored dates (Dⱼ) with a current date (D_{c}) and which is adapted for producing a signal for the transmission of a cell when the comparator indicates a coincidence or a past date of the stored date, the period of time allocated to the connection being added to the stored date,
- a comparing circuit for producing an indication of a past or a future date in timing with said preparation signal by comparing the transmission date of each connection of the selected groups with the current date,
- a re-allocation circuit for re-allocating the same transmission date for an indication of a future date or for adding to the transmission date said time for an indication of the past date.

2. A multiplexing apparatus (160) suitable for a system as claimed in claim 1, comprising:
- a plurality of access terminals (180) for receiving information cells, each of which access terminals being provided for a transmission at a given connection rate,
- a plurality of buffer elements (201) of the FIFO type which are each coupled to one of said terminals to form a queue of cells received on said accesses,
which apparatus is **characterized in that** it includes an allocation circuit (300) comprising a memory (501) in which a date (Dⱼ) and a time (Tj), whose value is fixed by said connection rate, are allocated to each of the connections and in which an organization of connection groups is provided, while each of the groups is allocated to connections whose rate is of the same order of magnitude, the multiplexing apparatus further comprising:
- an addressing set (503) adapted for producing an addressing cycle for cyclically addressing each connection of each group a certain number of times,
- a processing circuit (510) for updating said dates by utilizing a comparator (512) adapted for comparing the stored dates (Dⱼ) with a current date (D_{c}) and which is adapted for producing a signal for the transmission of a cell when the comparator indicates a coincidence or a past date of the stored date, the period of time allocated to the connection being added to the stored date,
- a comparing circuit for producing an indication of a past or a future date in timing with said preparation signal by comparing the transmission date of each connection of the selected groups with the current date,
- a re-allocation circuit for re-allocating the same transmission date for an indication of a future date or for adding to the transmission date said time for an indication of the past date.
